# EUROPEAN PATENT SPECIFICATION

(11) **EP 1 656 424 B1**
(45) Date of publication and mention of the grant of the patent: **18.04.2018**
(21) Application number: 04744249.6
(22) Date of filing: 11.08.2004
(51) Int. Cl.: C09C 1/04, C09C 1/00, C09D 5/36, C06B 23/00

(54) **FLAKE FOR COVERT SECURITY APPLICATIONS**
PLÄTTCHEN FÜR VERDECKTE SICHERHEIT
PAILLETTES POUR APPLICATIONS CACHEES DE SECURITE

(30) Priority: 14.08.2003 US 641695; 20.01.2004 US 762158
(43) Date of publication of application: 17.05.2006
(60) Divisional application: 07021393.9
(73) Proprietor: Viavi Solutions Inc., Milpitas, CA 95035 (US)
(72) Inventor: ARGOITIA, Alberto, Santa Rosa, CA 95401 (US); COOMBS, Paul, G., Santa Rosa, CA 95404 (US); MARKANTES, Charles, T., Santa Rosa, CA 95401 (US); KOHLMANN, Paul T., Santa Rosa, California 95401 (US)
(74) Representative: Murgitroyd & Company
(86) International application number: PCT/IB2004/002615
(87) International publication number: WO 2005/017048

(56) References cited:
- EP-A- 0 978 373
- WO-A-01/03945
- WO-A-02/40599
- WO-A-02/053677
- WO-A-03/102084
- WO-A2-2004/024836
- US-A1- 2002 021 003

## Description

### FIELD OF THE INVENTION

The present invention relates generally to pigment flakes, and more particularly to a coating composition such as ink or paint that provides a covert security feature (e. g. anti- counterfeiting feature) to objects that the coating composition is applied to.

### BACKGROUND OF THE INVENTION

Specialty pigments have been developed for use in security applications, such as anti-counterfeiting devices printed on banknote, packaging of high-value items, seals for containers, and even for direct application to commercial items. For example, the U. S. twenty-dollar Federal Reserve Note currently uses optically variable ink. The number"20" printed in the lower-right comer of the face of the note changes color as the viewing angle changes. This is an overt anti-counterfeiting device. The color-shifting effect is not reproducible by ordinary color photocopiers, and someone receiving a note can observe whether it has the color-shifting security feature to determine the note's authenticity.

Other high-value documents and objects use similar measures. For example, iridescent pigments or diffractive pigments are used in paints and inks that are applied directly to an article, such as a stock certificate, passport, original product packaging, or to seals that are applied to an article. As counterfeiters continue to become more sophisticated, security features that are more difficult to counterfeit are desirable.

One anti-counterfeiting approach uses microscopic symbols on multi-layer color- shifting pigment flakes. The symbols are formed on at least one of the layers of the multi- layer color-shifting pigment flakes by a local change of an optical property(s), such as reflectivity. The multi-layer color-shifting pigment flakes generally include a Fabry Perot- type structure having an absorbing layer separated from a reflective layer by a spacer layer. The reflective layer is typically a layer of metal, which renders the pigment flake essentially opaque. If a large portion of these pigment flakes are mixed with other pigment, the resultant color might be significantly different from the pigment, and if too few of these flakes are mixed with other pigment, they might be difficult to find. Patent Application EP0978373 published on Feb. 09, 2000, in the name of Mueller et al., uses microscopic symbols on irregularly-shaped color-shifting flakes. The flakes are manufactured by providing symbols to a multilayered sheet, which is broken afterwards into flakes with further grinding to achieve the desired flake size. Since the symbols are made by at least partial destruction of the sheet, the sheet breaks along or across the symbols, thus significantly reducing the yield and the recognition of the indicia. Patent Application WO0103945 published on Jan. 18, 2001, in the name of Bonkowski et al., teaches irregularly-shaped color-shifting multilayer optical interference flakes dispersed in polymeric medium. Patent Application WO03102084 published on Dec. 11, 2003, in the name of Argoitia et al., teaches irregularly-shaped all-dielectric diffractive pigments. Patent Application WO0240599 published on May 23, 2003, in the name of Coombs et al., teaches irregularly-shaped luminescent pigments with color-shifting properties. U.S. Patent Application 20020021003 published on February 21, 2002, in the name of McGrew and Patent Application WO02053677 published on July 11, 2002, in the name of Barbera-Guillem, teach using "quantum dot" crystals having a size of few nanometers for providing a distinct fluorescent signature to security inks, etc. WO 2004/024836 discloses flakes having a selected shape comprising a regular pattern of magnetic lines on their surface.

Clear pigment flakes with holographic information are also used for anti-counterfeiting purposes. A monochromatic volume hologram is formed in a polymeric platelet using a reference laser light in the visible, infrared ("IR"), or ultraviolet ("UV") region. The polymeric platelet does not have a metallic reflective layer, and may be mixed in with other coatings, including metallic coatings (*e.g.* inks and paints), without disturbing the subjective color appearance of the coating. The polymeric platelets can also be incorporated in a varnish coating, which may be applied over an article without changing its color. When the polymeric platelets are irradiated with the reference laser light, the hologram may be read for the information it contains. However, polymeric materials may break down in sunlight and holograms have become relatively easy to counterfeit because an original hologram can provide a "fingerprint" (template) that facilitates copying. Holograms are not as strong an anti-counterfeiting device as they used to be.

Another technique uses epoxy-encapsulated shaped flakes of polyethylene terephthalate ("PET"). A reflective layer is deposited on a roll of PET, and then the PET is cut into pieces. The flakes are coated or encapsulated with epoxy to improve the durability of the reflective layer. These flakes are available in a variety of shapes, such as square, rectangle, hexagon, and "apostrophe," and a selection of reflective metallic tints, such as silver, pewter, gold, and copper. However, the epoxy layer and the relatively thick PET substrate (which typically has a minimum thickness of about 13 microns (0.5 mils) for use in vacuum deposition processes) result in a relatively thick flake, typically greater than 14 microns. Unfortunately, such a thick flake is not desirable for use in covert applications where the thickness is substantially greater than the base pigment. Similarly, such thick flakes do not flow well in inks, and create lumps in paint. When paint includes a thick flake that creates a rough surface, a relatively thick clear topcoat is typically applied over the rough surface.

It is desirable to mark objects with covert anti-counterfeiting devices that overcome the limitations of the techniques discussed above.

### BRIEF SUMMARY OF THE INVENTION

The present invention relates to a plurality of inorganic dielectric taggent flakes (18), each being 5-100 microns across, comprising one or more thin film layers, and having a same selected shape, but not including a symbol of logo being magnetic stripes. A coating composition comprising said flakes and a method of making said flakes. A coating composition includes covert flakes with identifying indicia made of a single layer of inorganic dielectric material. Examples of identifying indicia include selected flake shape(s) and/or symbol(s). The covert flakes are typically dispersed in a carrier, such as a varnish base, paint vehicle or ink vehicle, to form a coating composition. The covert flakes are dispersed in sufficiently dilute concentration so that the covert flakes are not easily detectable in the coating composition by casual observation and can be clear or colored to match the color of a base pigment or have a different optical characteristic, such as being highly reflective ("bright" or "silver").

In a particular embodiment, a coating composition includes covert opaque flakes less than about 10 microns thick with identifying indicia. Examples of identifying indicia include selected flake shape(s) and/or compositions. The thickness of the single layer of inorganic dielectric material is selected to provide a covert flake that has color to match a mica-based nacreous base pigment.

In a particular embodiment, covert security flakes fluoresce when illuminated with non-visible radiation. In an embodiment of the invention, fluorescing covert security flakes make up less than 1% of the composition.

In another embodiment, clear covert flakes in a varnish composition make up to 20% of the composition, In another embodiment, clear covert flakes make up to 10 weight percent of a total pigment weight in a composition having optically variable base pigment flakes.

In a particular embodiment the covert flakes are a single layer of an inorganic dielectric material, such as ZnS. The thickness of the single layer of inorganic dielectric material is selected to provide a covert flake that has color, or that is clear. In a further embodiment, clear covert flake is heat-treated to improve its clarity (*i.e.* "whiteness").

In another embodiment, a coating composition has clear covert flakes that are not easily detectable in the coating composition by observation under visible light dispersed in a carrier. The clear covert pigment flakes fluoresce when illuminated with UV light and have one or more symbols readable under visible light at a magnification of 50X-200X. In a particular embodiment, the clear covert flakes in the carrier have a transmittance of more than 70% in the visible region.

A composition according to an embodiment of the present invention is applied to an object to provide a covert security feature. A pigmented composition may be used to print a field (*e.g.* an image) on the object, and a varnish composition may be used to print a clear field on the object, or to overprint an existing image on the object. In an embodiment of the invention, covert flake is mixed with base pigment to provide a covert security feature to images printed with the composition that look substantially similar to images printed with the base pigment.

In a method according to an embodiment of the present invention, symbols on covert flakes are not readable when the covert security feature is illuminated with non-visible radiation, *i.e.* when the flake is fluorescing. The location of a covert flake is identified using non-visible radiation, and then the flake is observed under visible light (typically under magnification of 50X-200X) to read the symbol(s) on the covert flake.

### BRIEF DESCRIPTION OF THE DRAWINGS

Fig. 1 is a plan view of a portion of a document with a security feature according to an embodiment of the present invention.
Fig. 2A is a simplified view of a portion of a deposition substrate having an embossed portion and a non-embossed portion.
Fig. 2B is a simplified view of a portion of another deposition substrate 11' having an embossed portion 13' and a non-embossed portion 15'
Fig. 3A is a simplified plan view of a portion of a security feature according to an embodiment of the present invention.
Fig. 3B is a simplified plan view of a portion of a security feature according to another embodiment of the present invention.
Fig. 3C is a simplified plan view of a portion of a security feature according to yet another embodiment of the present invention.
Fig. 4A is a simplified cross section of a bright pigment flake 20 according to an embodiment of the present invention.
Fig. 4B is a simplified cross section of a bright flake 20' providing an elemental fingerprint.
Fig. 4C is a simplified cross section of a color-shifting pigment flake 30 according to another embodiment of the present invention.
Fig. 5 is a cross section of a varnish with clear or opaque covert flakes dispersed in a carrier according to an embodiment of the present invention.
Fig. 6 is a cross section of base flakes and covert flakes dispersed in a binder according to another embodiment of the present invention.
Fig. 7A is a simplified plan view of a portion of a security feature printed with clear, inorganic covert flake according to an embodiment of the present invention as seen under a microscope using UV illumination.
Fig. 7B is a simplified plan view of the portion of the security feature of Fig. 7A as seen under a microscope using visible light for illumination.
Fig. 8 shows the color travel for a test sample prepared with an ink, and for test samples prepared with the ink in combination with covert pigment flakes according to an embodiment of the present invention.
Fig. 9 is a simplified flow chart of a method of observing covert flakes according to an embodiment of the present invention.
Fig. 10 is a flow chart of a method of making pigment flake according to an embodiment of the present invention.

### DETAILED DESCRIPTION OF THE INVENTION

### I. Introduction

Flakes for covert security applications arc not typically seen by casual observation. Some sort of inspection technique, such as inspection under a microscope or illumination with a particular type of light, is used to find and/or read the flakes. Flakes according to embodiments of the invention can be colored ("pigment flakes") or essentially clear.

In one embodiment, flakes containing indicia, such as a symbol or a particular shape, substantially match the visual characteristics of a bulk pigment or other substance they are mixed with. In a particular embodiment, a single-layer inorganic flake having a selected shape or symbol is mixed with an iridescent mica-based flake or other base pigment. In another embodiment, clear flakes having indicia are mixed with bulk pigment without disturbing the visual characteristic of the resultant mixture. In yet another embodiment, clear flakes having indicia are mixed in a varnish and applied over an object to provide a covert security feature without substantially changing the underlying color. As used herein, a varnish is generally a substantially clear composition.

In one embodiment, opaque flakes containing indicia, such as a particular shape, substantially match the visual characteristics of a bulk pigment or other substance they are mixed with. In a particular embodiment, a single-layer inorganic opaque flake having a selected shape is mixed with an iridescent mica-based flake or other base pigment. For the purpose of this discussion, a "single layer" of inorganic material includes multiple layers of the same inorganic material built up upon each other.

Inorganic covert flakes are particularly desirable in applications where heat, solvents, sunlight, or other factors may degrade organic flakes. For example, an inorganic covert flake used in an explosive is detectable even after exposure to high temperatures and/or pressures, and is persistent in the environment. Flakes according to embodiments of the present invention also are substantially thinner, typically less than about 10 microns, than conventional shaped flakes, enabling their use in ink and produce a smooth surface finish in paints without having to use a clear topcoat. Thin, inorganic flakes according to embodiments of the present invention also have a density closer to the density of base pigment flakes made using similar techniques. Thick flakes incorporating organic substrates often have a different density than thin-film base pigment flake, and may segregate, either before or during application while the carrier is fluid. Flake segregation is undesirable because it can result in an inconsistent ratio of covert and base flakes in a composition, and may degrade the covert nature of the covert flakes if segregation results in an unduly high concentration of covert flakes.

In a particular embodiment, flakes made from a single-layer of ZnS are heat-treated to whiten or "bleach" the appearance of the flake and improving the clarity (*i.e.* reducing the yellow nature) of the resultant composition. For the purpose of this discussion, a "single layer" of inorganic material includes multiple layers of the same inorganic material built up upon each other.

In yet another embodiment, covert flakes are mixed with a chemical, such as an explosive, explosive precursor, food, drug, or controlled substance. The covert flakes include indicia, such as symbols and/or other patterning (*e.g.* grooves) that identify the manufacturer or provide other specific information. Inorganic flakes are particularly desirable in applications where heat, solvents, sunlight, or other factors may degrade organic flakes. For example, an inorganic covert flake used in an explosive is detectable even after exposure to high temperatures and/or pressures, and is persistent in the environment.

### II. Exemplary Covert Flake

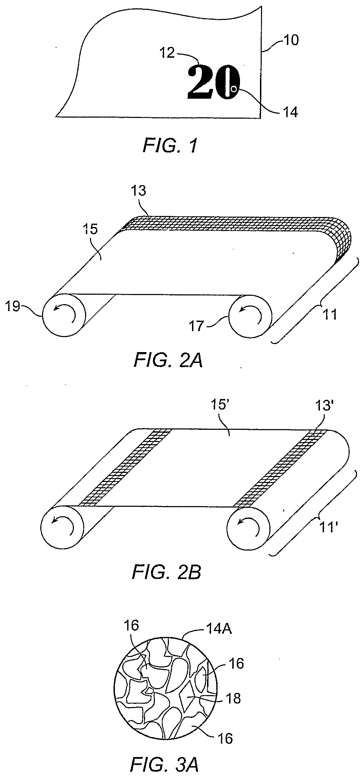

Fig. 1 is a plan view of a portion of a document 10 with a security feature 12 according to an embodiment of the present invention. At least a portion 14 of the security feature 12 is printed with ink or paint including clear, colored or opaque flakes having indicia (hereinafter "covert flakes") mixed with bulk pigment, such as bulk pigment flakes. In one embodiment, the covert flakes have a particular shape, such as being square, rectangular, trapezoidal, "diamond" shaped, or round, for example. In another embodiment, the covert flakes include a symbol and/or grating pattern, with or without having a selected shape. In a particular embodiment, the grating pattern has a grating spacing that is not optically active in the visible range of the spectrum. That is, these grating patterns do not form a visible diffraction grating. Covert flakes are also sometimes referred to as "taggent" flakes, although not all taggent flakes are necessarily covert flakes.

Generally, the bulk pigment particles, including bulk pigment flakes, have an irregular shape. In one embodiment, the covert flakes are distinguishable from bulk pigment flakes by their shape. Alternatively, bulk pigment flakes have a first selected shape, and the covert flakes have a second selected shape. Production of shaped pigment flakes is accomplished by a variety of techniques, such as using a patterned substrate to deposit the flake material on the substrate and then separating the flake from the substrate to obtain the pattern, or using a laser or other means to cut the patterned flakes from a sheet of flake material. The selected shape of the covert flakes may be associated with a manufacturing facility, date of manufacture, or other aspect of the document 10, or ink used in producing the document, for example.

A roll coater is one type of apparatus that can be used to produce covert flakes according to embodiments of the invention. A roll of a sheet of polymer substrate material (also known as a "web") is passed through a deposition zone(s) and coated with one or more thin film layers. Multiple passes of the roll of polymer substrate back and forth through the deposition zone(s) may be made. The thin film layer(s) is then separated from the polymer substrate and processed into flake. Other apparatus and techniques may be used.

It is generally desirable to limit the total thickness of thin film layers deposited (and hence removed) from a roll of polymer film substrate to less than about 10 microns. PET is one type of polymer film substrate used in roll coaters, and the PET film substrate is usually at least about 13 microns thick. Thinner PET film tends to thermally deform during vacuum deposition processes. Both the heat in the deposition zone and the heat of condensation of the deposited thin-film layer(s) increase the temperature of the polymer substrate as it passes through a deposition zone. Thus, the minimum thickness of flake cut from and incorporating PET film is about 13 microns.

Alternatively, or in addition to, having a selected shape, the covert flakes may include a grating pattern. The grating pattern is embossed on a substrate used in a roll coater prior to depositing thin film layers that are processed into flakes, or otherwise formed. In a further embodiment, a selected amount (percentage) of the deposition substrate surface area is embossed with a grating pattern or shape pattern to obtain a selected amount of covert flakes when the thin film layers are stripped from the deposition substrate and processed into flakes. This technique provides covert flakes with the same optical design (thin film layer composition and thickness) as the base flake. For example, embossing 10% of the deposition substrate surface area with a grating pattern and/or shape pattern would result in a pigment mixture having about 10% covert flakes. Different rolls of deposition substrate are produced with different percentages of embossed surface area to obtain pigment mixtures having different amounts covert flake, or are embossed with different patterns to obtain different shapes and/or grating patterns.

Fig. 2A is a simplified view of a portion of a deposition substrate 11 having an embossed portion 13 and a non-embossed portion 15. The embossed portion has a frame, which is exaggerated for purposes of illustration, and alternatively or optionally has a grating or symbol, for example, and the non-embossed portion is essentially smooth. Alternatively, the non-embossed portion is embossed with a different frame, grating, or symbol. The ratio of the surface area of the embossed portion 13 to the non-embossed portion 15 produces a selected amount of taggent flake (produced from the embossed portion) having the same thin-film structure as the base flake (produced from the non-embossed portion). The deposition substrate 11 travels from one roll 17 to another 19 through a deposition zone (not shown) in a roll coater, but alternative embodiments use different types of substrates and deposition systems. Fig. 2B is a simplified view of a portion of another deposition substrate 11' having an embossed portion 13' and a non-embossed portion 15' .

Alternatively or in addition to having a selected shape, the covert flakes may include one or more symbols. The symbol could be a letter, number, or other marking. A symbol could indicate the manufacturer of the covert flake, the user of the covert flake, or a date code, for example. The symbol(s) could be embossed on a substrate used in a roll coater prior to depositing thin film layers that are processed into flakes, or formed on the thin film layers after deposition, such as by laser ablation, embossing, or etching, for example.

A pigment flake with a selected shape or symbol provides a security feature even if it is easily observable; however, if a pigment flake with a selected shape or symbol is not easily observable, a counterfeiter might not even be aware that a covert flake is present. One embodiment of the present invention uses covert pigment flake that has the same optical characteristics as the base pigment. The percentage of covert pigment flakes is sufficiently small so that the covert pigment flakes are not easily found, even under microscopic examination. For example, if an ink composition has covert pigment flakes making up less than 1% of the total weight of pigment (*i.e.* base pigment plus covert pigment), the covert pigment flakes are difficult to find.

The covert pigment flakes are not seen by unaided human vision, but are visible under magnification of about 50 X to 300 X. Covert pigment flakes having essentially the same visual characteristics can be mixed with base pigment in a wide range of proportions without significantly affecting the color of the composition. In some embodiments, covert pigment flakes are readily identifiable in compositions having 5-10 weight % covert pigment flakes and 95-90 weight % base pigment flakes having similar appearance (*e.g.* color and/or color travel). Often, shaped opaque covert flakes are easily identifiable in the field using hand-held microscopes (*e.g*. "shirt-pocket" microscopes), and require less magnification to identify than similar sized flakes having symbols.

Another approach is to use a clear, inorganic covert flake with a selected shape or symbol. In one embodiment, clear inorganic covert flakes are mixed with base pigment flakes in a carrier, such as an ink vehicle or a paint vehicle, to form a composition, such as ink or paint. In another embodiment, the clear inorganic covert flakes are mixed in a clear carrier to form a varnish. The index of refraction of the carrier is sufficiently similar to the index of refraction of the clear covert flake so that the covert flake "disappears" in the carrier. Examples of carriers include polyvinyl alcohol, polyvinyl acetate polyvinylpyrrolidone, poly(ethoxyethylene), poly(methoxyethylene), poly(acrylic) acid, poly(acrylamide), poly(oxyethylene), poly(maleic anhydride), hydroxyethyl cellulose, cellulose acetate, poly(sacchrides) such as gum arabic and pectin, poly(acetals), such as polyvinylbutyral, poly(vinyl halides), such as polyvinyl chloride and polyvinylene chloride, poly(dienes) such as polybutadiene, poly(alkenes) such as polyethylene, poly(acrylates) such as polymethyl acrylate, poly(methacrylates) such as poly methylmethacrylate, poly(carbonates) such as poly(oxycarbonyl oxyhexamethylene, poly(esters) such as polyethylene terephthalate, poly(urethanes), poly(siloxanes), poly(suphides), poly(sulphones), poly(vinylnitriles), poly(acrylonitriles), poly(styrene), poly(phenylenes) such as poly(2,5 dihydroxy-1,4-phenyleneethylene), poly(amides), natural rubbers, formaldahyde resins and other polymers.

The clear covert flake does not typically become totally invisible in the carrier, but becomes less visible than it is in air. If an observer knows where to look, the clear flake typically has a shadowy appearance, as do symbols formed in or on the clear flake. However, if one does not know where or how to look for the clear flake, it usually goes undetected.

In a particular embodiment, the clear covert flake has a reflectivity in the visible range of about 30% in air, and less than 30% reflectivity in the carrier. Thus, the clear covert flake typically has a transmittance of more than 70% when dispersed in the carrier, which maintains the visible characteristics of the base pigment that the clear covert flake is mixed with or that underlies a varnish containing the clear covert flake.

Clear, inorganic covert flakes are difficult to detect, even when they make up more than 1% of the total pigment weight in a composition or varnish. In one embodiment, the clear covert flake is a single layer of ZnS heat-treated to fluoresce under UV light. The location of the ZnS covert flake is illuminated with UV light to identify its location, and then it is observed using visible light, typically under a microscope at about 20X-200X, to observe the indicia of the covert flake.

Another approach is to use an opaque covert flake with a selected shape that is a different color than the base flake. In one embodiment, the opaque covert flake is a bright metallic ("silver") flake having a thin-film layer of aluminum or other reflector between layers of a dielectric material, such as MgF₂. Bright flake is generally highly reflective over a wide range of visible wavelengths, and often does not have a characteristic color. Bright flake made with gold and copper may appear yellowish and reddish, for example. It has been found that between about 0.25 weight % to about 5 weight % of shaped (*e.g.* "diamond" shaped) bright flake in colored base pigments can be added without causing a noticeable change in color, but are still easily identifiable under illuminated magnification of about 50 X (*i.e.* 50 time magnification). Under illuminated magnification, both the shape and high brightness of the flake distinguish it from the base flake. When less than about 0.25% of shaped bright flake is used the covert flakes become difficult to detect because dilution with the base flake results in fewer shaped bright flakes in the field of view.

When the amount of bright flake exceeds about 5 weight %, the color (*e.g.* hue) of certain types of flakes, particularly dark colored flakes, changes. In these instances, too much bright flake essentially "dilutes" the color of the base pigment. However, using shaped bright flake in compositions having color-shifting pigment is highly desirable because a single type of shaped bright flake is added in small quantities to many different types (color and/or color travel) of pigment flake, and a relatively small amount of shaped bright flake provides a covert security feature. Similarly, dilution of color is not critical in applications where compositions containing pigment and bright flake are not intended to replace or otherwise be indistinguishable from compositions containing 100% pigment flake.

Fig. 3A is a simplified plan view of a portion 14A of a security feature 14 according to an embodiment of the present invention and illustrated in Fig. 1. The portion 14A of the security feature 14 is viewed under magnification, typically about 20X-200X, in order to see the shape of the flakes, which are typically 5-100 microns across, more typically 20-40 microns across. The security feature has been printed with ink including base pigment particles 16 and a covert pigment flake 18 having a selected shape, in this case a "diamond" shape. The base pigment particles are illustrated as being irregularly shaped flakes. Alternatively, the base pigment particles are flakes having a selected shape. The optical characteristics and concentration of the covert pigment flake is chosen so as to not disturb the visual appearance of a composition made with the base pigment particles.

When the covert pigment flake is illuminated with non-visible radiation, such as UV or IR light or an electron beam, the covert pigment flake glows. In a particular embodiment, the covert pigment flake fluoresces under UV light. Illuminating the covert pigment flake with non-visible radiation allows an observer to identify where the covert pigment flake is located in the security feature, even if present in very small quantities. The observer then inspects the covert pigment flake under visible light to see the selected shape of the covert pigment flake, or to see the symbol (s) on the covert flake.

The base pigment particles 16 are illustrated as being irregularly shaped flakes. Alternatively, base pigment flakes have a selected (i. e. regular) shape. Similarly, the covert pigment flake 18 could have a grating. The addition of a grating further increases the difficulty of counterfeiting. In some embodiments, the covert pigment flake 18 has generally the same optical characteristics as the base pigment particles. Alternatively, the covert pigment flake 18 has different optical characteristics as the base pigment particles but is present in sufficiently small quantities so as not to disturb the visual appearance of a composition made with the base pigment particles.

In a particular embodiment, the"diamond-shaped"covert flakes were bright flakes about 25 microns by 35 microns across. The shaped flakes are made by embossing a diamond pattern into a roll of PET deposition substrate material, and then depositing a standard thin-film design for bright flake (e. g. about 100-60 nm of Al between layers of MgF2 that are each about 400 nm thick). The total thickness for this bright flake is about 900 nm, which is about one micron. The embossed pattern is also known as a "frame" (as opposed to a grating which is intended to produce a pattern in or on the flake), and is positive in some embodiments and negative in other embodiments.

The combination of a metal layer with one or more dielectric layers facilitates removal of the flake from the deposition substrate. A thin film stack having only dielectric layers is brittle and often has residual stresses from the deposition process. Such thin film stacks tend to break more randomly, resulting in fewer shaped flakes. An all-metal stack or single layer is difficult to process into patterned flakes according to the frame of the deposition substrate because the metal is relatively ductile. In particular embodiments, metal- dielectric and dielectric-metal-dielectric flake having a total thickness of between 0.5 microns and 3 microns provides a good combination of ductile and brittle characteristics that result in good patterning of the flake when it is removed from the substrate and processed. In a particular embodiment, shaped bright flake having a total thickness of
about one micron of a ductile metal layer between brittle dielectric layers yielded about 90% diamond-shaped flakes from an embossed deposition substrate.

The thin-film layers were stripped from the deposition substrate and processed into flake using conventional techniques. The embossed diamond pattern provided lines along which the thin-film layers broke into flakes having the selected diamond shape. In another embodiment, the diamond-shaped flakes were about 12 microns by 16 microns and included a grating on the major surface of the flakes. The grating was nominally 2000 lines/mm and did not produce a noticeable diffractive effect in a composition when used as a taggent. The shape of the 12-by-16 micron flake was easily seen at 100 X magnifications; however, the grating was not easily seen at this magnification. The grating was readily apparent at 400 X magnifications. In other embodiments, a grating is coarser, and is easily seen at the same magnification (*e.g.* 50 X to 100 X) that is used to discern the shape of the taggent flakes. Thus, gratings used to provide a security feature to taggent flakes do not have to be optically active in the visible portion of the spectrum.

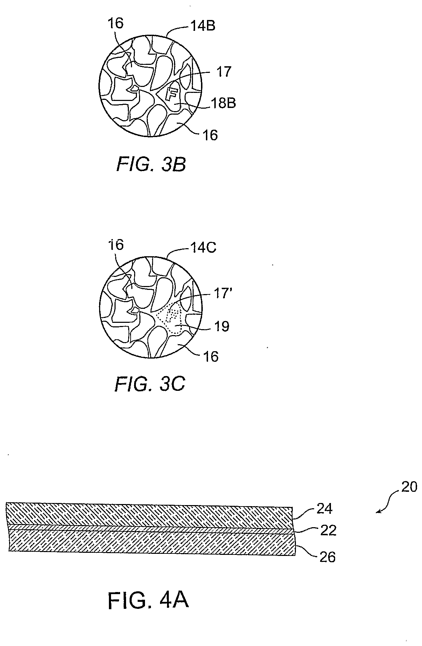

Fig. 3B is a simplified plan view of a portion of a security feature 14B according to another embodiment of the present invention. The security feature has been printed with ink including base pigment particles 16 and a covert pigment flake 18B having an irregular shape and containing a symbol 17, in this case a stylized "F". Several different symbols and combination of symbols could be used. The portion 14B of the security feature is viewed under magnification, typically about 100X-200X, in order to see the symbol(s), which are typically about 0.5-20 microns high, on the covert pigment flake 18B.

The covert pigment flake 18B was made by depositing one or more thin film layers on a substrate, such as a plastic film, separating the thin film layer(s) from the substrate, and processing the separated thin film layer(s), such as by milling and sieving, into the desired flakes. The covert pigment flakes are typically about 5-100 microns across, and more typically about 20-100 microns across. The symbol 17 is typically about 0.5-20 microns tall. In a particular embodiment, the symbol 17 is about 700 nanometers tall and in another embodiment the symbol is about 15 microns tall. It is generally desirable to have the symbols sufficiently close so that most flakes have at least an identifiable portion of a symbol. In one embodiment, symbols that were 8 microns tall were spaced about 2 microns apart, which resulted in covert flakes having about 6 symbols per flake, on average. Symbols having bilateral symmetry appear the same whether viewed from the top or the bottom of a clear flake, but such symmetry is not required. In another embodiment, symbols that were about 15 microns tall were spaced about 4 microns apart.

The symbols are typically embossed on the substrate, and the thin film layer(s) deposited over the embossed substrate. The surface of the substrate, namely the symbol, is replicated in at least the first thin film layer that is deposited on the substrate, in either positive or negative relief. Thus, when the thin film layer(s) is separated from the embossed substrate and processed into flake, at least some of the flakes contain the symbol. The spacing of embossed symbols on the flake can be selected so that essentially every flake above a certain size will contain at least one symbol.

The base pigment particles are illustrated as being irregularly shaped flakes. Alternatively, the base pigment particles have a selected shape. Similarly, the covert pigment flake 18B could have a selected shape, in addition to the symbol 17, and a superimposed grating, such as a diffraction grating, could be included either over the entire flake or over selected portions of the flake, such as over the field of the flake, but not over the symbol. Alternatively, one type of grating is formed in the field of the flake, and another type of grating (*e.g.* with different pitch) is formed in the symbol area. The addition of a grating further increases the difficulty of counterfeiting. The covert pigment flake has generally the same optical characteristics as the base pigment particles, or is present in sufficiently small quantities so as not to disturb the visual appearance of a composition made with the base pigment particles.

In a particular embodiment, the base pigment particles are flakes of mica coated with a layer of TiO₂ or other dielectric material. The coating material typically has a relatively high index of refraction. Mica is a naturally occurring mineral that is relatively inexpensive and easily processed into flake substrate. When mica flake substrate is coated with a layer of high-index material of a selected thickness, a nacreous pigment flake is obtained. Mica flake substrate can be coated with several alternative materials using a variety of processes. Such pigments are commonly known as "mica-based" pigments. A photocopy of an image printed with such nacreous pigment flakes does not look like the original, thus mica-based pigment flakes are desirable for use to provide overt security features. However, shaping mica flake substrate or providing a symbol on mica flake substrate is impractical. Covert pigment flake according to an embodiment of the present invention is mixed with the mica-based pigment to enable a covert security feature to be included in images printed with mica-based pigment flakes. Covert pigment flakes made of a single layer of inorganic dielectric material, such as TiO₂ or ZnS, can have an appearance similar to a mica-based pigment if the covert pigment flake has a thickness about five times the quarter-wave optical thickness ("QWOT") at a selected wavelength in the visible spectrum. Typically, a single-layer covert pigment flake of ZnS intended to match the appearance of a mica-based pigment has a thickness of about 60 nm to about 600 nm.

Processing all-dielectric flake from a deposition substrate having an embossed diamond-shaped pattern tends to have a lower yield than a counterpart metal-dielectric flake.

Fig. 3C is a simplified plan view of a portion of a security feature 14C according to yet another embodiment of the present invention. The security feature has been printed with ink including base pigment particles 16 and a clear covert flake 19 having an irregular shape and containing a symbol 17', in this case a stylized "F". Several different symbols and combination of symbols are alternatively used. Alternatively, a clear covert flake has a selected shape, with or without a symbol.

The clear covert flake is formed from a deposited (*i.e.* synthetic), inorganic thin film layer and in a particular embodiment is a single layer of ZnS about 700 nm thick. In a further embodiment, the ZnS flake it treated to enhance fluorescence. Alternatively, other materials that fluoresce visible light when exposed to UV light are used in other embodiments, such as zinc silicate, calcium-tungsten oxide, yttrium phosphate vanadium, doped yttrium oxide (such as with europium), and alkaline earth aluminates doped with rare earth aluminates, to name a few. Alternatively, other materials that fluoresce in the long UV range (300-400 nm) when excited with low UV radiation (about 250 nm) are used. Fluorescence is not required for all embodiments of the present invention.

In one embodiment, the material of the clear covert flake is chosen according to the intended carrier that it will be mixed with to obtain a selected match or mismatch of the index of refraction of the flake in the carrier. For example, when a clear flake made from a low-index material is mixed in a low-index carrier, the clear flake is very difficult to see. If the low-index clear flake is mixed in a high-index carrier, the clear flake is easier to see, but still not generally detected by casual observation.

Single layer flakes made of inorganic materials more than about ten QWOTs thick tend to be clear, rather than tinted or nacreous. However, even clear flakes can impart a yellowish tinge to a composition, such as a varnish. It was discovered that heat-treating some clear inorganic flakes improved their "whiteness", resulting in a superior varnish for use in covert security applications. In a particular embodiment, clear pigment flakes made from a single layer of ZnS about 700 nm thick were heated in air to a temperature of 550 °C for about 600 minutes to enhance fluorescence under UV light. This heat treatment also improved the whiteness of the ZnS flake.

It is thought that trace elements remaining from the roll-coating process contributed to the enhanced fluorescence. In particular, NaCl was used as a release layer on the polymer substrate used in the roll coating process. A single layer of ZnS was deposited over the NaCl release layer, which was subsequently dissolved in water to facilitate removal of the ZnS from the polymer substrate. It is thought that sodium from the release layer doped the ZnS or activated other dopants, resulting in enhanced fluorescence.

Fig. 4A is a simplified cross section of a bright pigment flake 20 according to an embodiment of the present invention. A reflective layer 22 is between two dielectric thin-film layers 24, 26. The dielectric thin-film layers 24, 26, provide stiffness to the bright pigment flake 20 and facilitate removal of the pigment flake from the roll coater substrate. It is desirable to keep the bright pigment flake less than 10 microns thick to provide a composition that dries or cures to a smooth surface. In particular embodiments, the thickness of the flake is between about 1 micron and about 3 microns. Thinner flakes tend to be more difficult to process and handle because they weigh so little, and thicker flakes are stronger, and hence more difficult to break along the frame pattern.

The reflective layer 22 is typically a thin-film layer of a highly reflective metal such as aluminum, platinum, gold, silver, or copper, or a moderately reflective metal, such as iron or chromium. The reflective layer 22 is sufficiently thick to be opaque (reflective) in the visible portion of the spectrum, but not so thick as to interfere with separation of the thin-film layers from the substrate and subsequent processing into flake. In other words, a metal reflective layer that was too thick would provide a ductile layer between the relatively brittle dielectric layers 24, 26 and tend to interfere with processing the deposited layers into flakes. Suitable materials for the dielectric layers include ZnS, MgF₂, SiO₂, Al₂O₃, TiO₂, Nb₂O₅, and Ta₂O₅, among others. In some embodiments, the dielectric thin-film layers 24, 26 also provide environmental protection for the reflective layer 22.

The bright flake 20 has a selected shape, and optionally or alternatively has other indicia, such as a surface (grating) pattern or an elemental fingerprint. In sufficiently low concentrations, the bright flake 20 is added to colored pigment and colored compositions (*e.g.* inks and paints). Shaped bright flake can be added to base (*i.e.* randomly shaped or alternatively shaped) bright flake as a covert security feature.

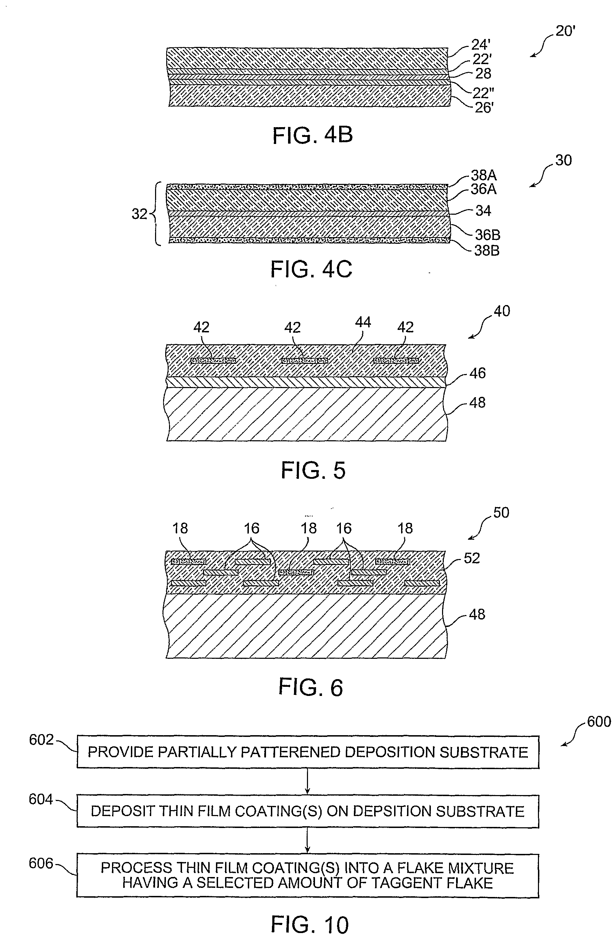

Fig. 4B is a simplified cross section of a bright flake 20' with an elemental indicator layer 28. The bright flake 20' has reflective layers 22' , 22" between dielectric layers 24', 26' , and a layer 28 providing an elemental indicator. The elemental indicator layer 28 is a layer of material that is not found in a base pigment that the bright flake will be used with, and that is readily detectable using elemental analysis techniques, such as secondary ion mass spectrometry ("SIMS"), energy dispersive X-ray ("EDX") and Auger analysis. Furthermore, the elemental indicator is present in the covert flake but not in the base flake, and micro-SIMS, micro-EDX or micro-Auger analysis easily detects this difference. Merely adding the indicating element to the pigment mixture (*e.g.* adding a small amount of a compound containing the indicating element to the carrier) would not overcome this security feature.

The elemental indicator layer 28 is not optically active because it is between the two opaque reflective layers 22', 22". The reflective layers 22', 22" are selected to be of the same material used in the base flake, such as aluminum. Suitable materials for an elemental indicator include platinum, iridium, osmium, vanadium, cobalt, and tungsten, among others. Those of skill in the art appreciate that the elemental indicator material chosen depends on the base pigment it will be used with. In an alternative embodiment, the reflective layer of bright pigment is of an elemental indicator material (*see* Fig. 3B, ref. num. 22). For example, covert bright or colored pigment flake using platinum as the reflective layer is mixed with base bright flake or colored pigment flake using aluminum as the reflective layer. In a further embodiment, the amount of flake having the elemental indicator incorporated into a pigment mixture or composition is chosen to provide a selected elemental ratio (*e.g.* aluminum to platinum) in the pigment mixture. In an alternative or further embodiment, the material of the dielectric thin-film layers 24', 26' (Fig. 4A, ref. nums. 24, 26) is chosen to provide an elemental indicator.

Fig. 4C is a simplified cross section of a color-shifting pigment flake 30 according to another embodiment of the present invention. The color-shifting pigment flake 30 is generally known as a symmetrical 5-layer Fabry-Perot interference flake. A thin film stack 32 includes a reflective metal layer 34, two spacer layers 36A, 36B, and two absorber layers 38A, 38B. The absorber layers are typically very thin, semi-opaque layers of chromium, carbon, or other material. The reflector, spacer, and absorber layers are all optically active, that is, they contribute to the optical performance of the color-shifting pigment flake. Each side of the flake provides similar Fabry-Perot interference structures to incident light, and hence the flake is optically symmetrical. Alternatively, the color-shifting pigment flake is an all-dielectric pigment flake.

The color and color travel of the color-shifting pigment flake is determined by the optical design of the flake, namely the material and thicknesses of the layers in the thin film stack 32, as is well-known in the art of optically variable pigments. The optical design of the color-shifting pigment flake 30 is typically chosen to match the optical properties of the base pigment flake that it will be mixed with. The color-shifting pigment flake 30 is shaped (see Fig. 3A, ref. num. 18), and optionally or alternatively includes other indicia, such as a surface grating pattern and/or elemental indicator.

For example, the reflective layer includes an elemental indicator, either a reflective metal that is different than the base pigment flakes, or includes an additional elemental indicator layer(s), which may or may not be optically active (see Fig. 3C, ref. num. 28). Alternatively or additionally, the spacer layers 36A, 36B and/or the absorber layers 38A, 38B include an elemental indicator. For example, if the base pigment flake uses MgF₂, SiO₂, or Al₂O₃ as a spacer layer material, the covert pigment flake 30 uses different spacer layer material, such as TiO₂ or ZnS. Spacer and/or absorber indicator materials include elements that are easily detected using elemental analysis.

In some embodiments, using a different spacer material and/or reflector material results in a covert pigment flake 30 that has different optical properties than the base flake. For example, even if the covert and base flakes have similar color at normal incidence, the color travel might be different. Generally, low-index spacer materials (such as MgF₂ and SiO₂) provide more color travel ("fast shifting" pigments) than high-index spacer materials (such as ZnS and TiO₂). However, such covert flakes can be added in relatively high concentrations to the base pigment flake, even if the color travel does not precisely match that of the base flake, because most casual observers cannot detect the difference between a mixture according to an embodiment of the invention and 100% base flake.

Fig. 5 is a cross section of a varnish 40 with covert flakes 42 dispersed in a carrier 44 according to an embodiment of the present invention. The carrier is clear or tinted, and the covert flakes 42 are at a concentration selected to avoid casual visual detection. An optional color coat or bright (*e.g.* "chromed") coating 46 has been applied to an object 48 underneath the varnish 40. The varnish 40 provides a covert security feature to the object without disturbing its appearance. In a particular embodiment, the optional color coat 46 is an image printed with nacreous or color-shifting pigment to provide an overt security feature to the object. The object is a document, product, packaging, or seal, for example. The varnish 40 enables providing a covert security feature to an object that already has a covert security feature without significantly altering the appearance of the object. For example, if stock certificates have been printed with overt security features and it subsequently becomes desirable to provide a covert security feature to the stock certificates, the overt security feature is over-printed with the varnish 40 or a similar ink composition (*i.e.* an essentially clear ink composition containing covert flakes). In another embodiment, an additional covert security feature is provided to an object already having one or more covert security features. In a particular embodiment, the covert flakes make up not more than 2% of the varnish. Additional discussion regarding varnishes is provided below in the section on experimental results.

Fig. 6 is a cross section of a composition 50 (*e.g.* ink or paint) including base pigment flakes 16 and covert flakes 18 dispersed in a binder or carrier 52 according to another embodiment of the present invention. The covert flakes 18 have a selected shape or other indicia (*e.g.* Fig. 3C, ref. num. 20'), such as an elemental indicator or a surface-grating pattern. Alternatively, the composition 50 includes selectively shaped clear flake, with or without a symbol(s), and/or covert pigment flake that is shaped and/or includes a symbol (*e.g.* Fig. 3A, ref. num. 18 and Fig. 3B, ref. nums. 18B, 20). In one embodiment, the amount of covert flake 18 in the composition is less than 1% of the total weight of the base pigment flake 16 and covert flake 18 ("total pigment weight"), which sufficiently disperses the clear covert flakes in the base pigment flake to make casual detection of the covert flake difficult. In an alternative embodiment, the amount of clear covert flake in the composition is greater than 1%. The composition 50 has been applied to an object 48. such as a label, product packaging, bank note, or consumer item.

Adding covert flake to an existing ink or paint composition provides a covert security feature to images made of the ink or paint. For example, ink with color-shilling pigment is used to provide a color-shifting image as an overt security feature on a bank note or other object. Covert flake according to an embodiment of the present invention is added to the ink, and the resultant mixture is used to print images that appear substantially similar as those printed with the ink. Thus, a casual observer of the bank note does not notice a change in the appearance of the overt security feature (*i.e*. color-shifting image) after the covert security feature is added. The indicia of the covert flake indicate a date-of-manufacture, a printing location, and/or the source (manufacturer) of the ink, for example.

### III. Identification of Covert Flakes

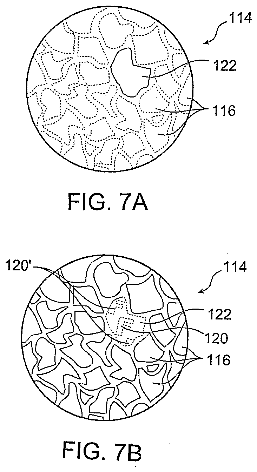

Fig. 7A is a simplified plan view of a portion of a security feature 114 primed with clear, inorganic covert flake 122 according to an embodiment of the present invention as seen under a microscope using UV illumination. The flakes are shown in a single layer for simplicity of illustration (*compare* Fig. 4). The clear covert flake 122 fluoresces (appears bright) and is easily distinguished from the base pigment flakes 116, which appear dark and are shown in dashed lines for purposes of illustration. Typically, a much larger field of view is observed (*i.e.* lower magnification, typically 20X-50X). A reduced field of view is being shown for simplicity of illustration. Once the location of the fluorescent covert flake is identified, the viewers can "zoom-in" on the covert flake.

Fig. 7B is a simplified plan view of the portion of the security feature 114 of Fig. 7A as seen under a microscope using visible light for illumination, it was discovered that symbols on the clear covert flake were not easy to read under UV light because the fluorescence was a bulk phenomenon and obscured the symbol. When the UV light was switched off and the clear covert flake 122 was observed under a microscope using visible light, the faint outline of a symbol 120 (as well as the flake) was observable. Fluorescent covert flakes are particularly desirable when the concentration of flakes is low. The clear covert flake 122 and the symbol 120 are shown as dashed lines in this view to represent that they appear as faint outlines under visible light. The base pigment flakes 116 are shown as solid lines because they are typically prominent under visible light. In a particular embodiment, the clear covert flake was ZnS having an index of refraction of about 2.2 in a high-gloss varnish that was first observed under UV light, and then the symbol on the flake was read using visible light at a magnification of 100X.

A similar result is expected for covert pigment flakes that fluoresce under UV light or other non-visible radiation. For example, covert pigment flake dispersed in base pigment flake, having similar visual characteristics, is difficult to detect when the covert pigment flake is sufficiently dilute. In one embodiment, the covert pigment flake has a selected shape that is observable under UV light. In another embodiment, the covert pigment flake has a symbol that is not easily observable under UV light, but is observable under visible light. The location of the covert pigment flake with the symbol is identified using UV light and then the UV light is switched off and the symbol is read using visible light.

Alternatively, a material that fluoresces at a shorter wavelength when illuminated with light at a longer wavelength is used to fabricate covert flakes or covert pigment flakes. It is believed that this type of fluorescence would be less easily noticed by a counterfeiter, enhancing it use in covert security applications. In one embodiment, near infrared or infrared light is used to illuminate covert flake or covert pigment flake to fluoresce in the visible range.

### IV. Experimental Results

Prior to developing clear covert flake or single-layer covert pigment, various alternatives were evaluated. A test standard using 100% magenta-to-green optically variable intaglio ("OVI") pigment flake was produced and measured. All taggent samples had a grating pattern of 2000 lines/mm, which makes the taggent flakes easier to distinguish from the base flake (*i.e.* locate) and more difficult to counterfeit. The grating pattern did not induce diffractive properties to images printed with the test compositions. It is believed that the low portion of the taggent flakes in combination with not being well oriented to the viewer avoided a diffractive property from occurring. In a particular embodiment of the present invention, a grating pattern was included on taggent flakes with symbols. The symbols were identifiable under a microscope at a first magnification, but the grating pattern was not easily seen at this first magnification. The grating pattern was seen at a higher magnification. It is believed that including such a grating pattern further enhances the covert nature of the taggent flake because a counterfeiter might see the symbol under microscopic examination, but not see the grating pattern, and hence not include it in a counterfeit article.

The first test sample ("sample 1") contained 90% (by weight) of the conventional magenta-to-green pigment flake mixed with 10% magenta-to-green OVI pigment flake including symbols ("taggent flake"). The taggent flakes were easy to detect by routine microscopic inspection, and the color performance of the mixture was the same as the test standard because the color of the taggent flake was well matched to the color of the base flake. However, close color matching involves careful monitoring of the production of the taggent flake. Similarly, a new optical design for each color of taggent flake would generally be used to match each color of base flake. Thus, this approach does not provide a generic taggent flake that can be mixed with a variety of colored base pigments.

A simpler approach is to use a standard taggent flake design that can be used with many different colors of base flake. Single-layer MgF₂ taggent flake (was mixed with the magenta-to-green OVI base pigment, the taggent flake making up 10% of the total pigment weight ("sample 2"). As with the color-matched OVI, color performance was essentially identical to samples produced with 100% base OVI pigment flake. However, the MgF₂ flakes were difficult to detect under routine microscopic examination, even at a concentration of 10%.

"Silver" (aluminum) taggent flake was also evaluated. Fabrication of silver flake is relatively simple and these flakes were very easy to detect at a concentration of 5%. It was hoped that silver taggent flakes would be able to be mixed with many colors of base pigment. However, the color performance of an intaglio blend containing only 5% silver taggent flake mixed with the magenta-to-green OVI base pigment ("sample 3") was poor. Thus, silver taggent flake may be useful in certain compositions, but appear to degrade the color performance of at least some base pigments.

Another approach is to use a standard taggent flake design that can be used with many different colors of base flake. Bright taggent flake using an aluminum reflector layer (giving the flake a "silver" appearance) was also evaluated. Fabrication of bright flake is relatively simple and these flakes were very easy to detect at a concentration of 5% when mixed with colored base pigment flakes. Bright taggent flakes are used with many colors of base pigment to provide covet security features. The amount of bright taggent flakes in the composition depends on the desired result. For example, the color performance of an intaglio blend containing 5% bright taggent flake mixed with the magenta-to-green OVI base is distinguishable in a side-by-side comparison from a composition of 100% magenta-to-green OVI flake. A composition essentially indistinguishable from 100% magenta-to-green OVI flake uses less than 5% bright flake, such as compositions with concentrations between about 0.25 weight % and 3 weight % of bright taggent flake in magenta-to-green OVI flake. It is believed that bright flake in concentrations greater than 5% may be added to pigment flake providing lighter or less saturated color without noticeably changing the appearance of the composition. Bright taggent flakes are easy to detect under modest magnification, even at concentrations below 1%, because of the combination of having a selected shape and of being a different color (*e.g.* "silver" instead of magenta).

Finally, clear taggent flake was made from a single layer of ZnS. Production of this flake is relatively easy, and detectability at 10% concentration was easy, which is to say it was more difficult than detecting the OVI taggent flakes, but much, much easier than detecting the MgF₂ taggent flakes. An intaglio blend with 10% ZnS flake and 90% magenta-to-green OVI flake ("sample 4") was compared against the test standard. The color performance was nearly equal, with a slight (about 3%) decrease in chroma. The persons involved in this subjective comparison are quite experienced in evaluating color performance of optically variable pigments, and used a side-by-side comparison against a standard. It is believed that 10% of this flake added to an existing ink or paint composition would preserve the color performance sufficiently so that an average observer would not notice any change. The ZnS clear taggent flake appears able to be added to a large number of colored pigments, including optically variable pigments without noticeably altering the appearance of compositions made with the colored pigments, and hence enables a generic taggent flake.

The measured optical performance of the samples described above is provided in Table 1:

**Table 1: Optical Performance of Intaglio Blends**

| Sample # | L* | a* | b* | C* | h |
|---|---|---|---|---|---|
| Test standard | 49.27 | 40.32 | -31.05 | 50.89 | 322.4 |
| Sample 1 | 49.08 | 40.25 | -30.87 | 50.73 | 322.51 |
| Sample 2 | 49.42 | 40.62 | -31.04 | 51.12 | 322.61 |
| Sample 3 | 52.67 | 35.26 | -27.26 | 44.57 | 322.29 |
| Sample 4 | 49.66 | 39.22 | -29.85 | 49.29 | 322.72 |

Clear ZnS flake for use as a taggent or covert taggent was also evaluated in varnish compositions. It was determined that in some instances almost one-third of the varnish composition could be clear flake with almost no change in the perceived appearance of the varnish composition. A high-gloss varnish base was used to make the varnish compositions and the varnish compositions were applied to white card stock of the type normally used for color evaluation of inks and paints. All varnish compositions were compared against a test standard of the varnish base without clear flake.

In the first varnish composition, 3% of as-deposited (*i.e.* not heat-treated for clarity) single-layer ZnS looked essentially identical to the test standard. A second varnish composition having 5% single-layer as-deposited ZnS flake was barely noticeably different when compared against the test standard, but it is believed that a casual observer would not notice the slight amount of yellowing. A third varnish sample with 10% single-layer as-deposited ZnS flake exhibited a noticeable change in appearance when compared against the test standard, and it is believed that some casual observers would notice a field printed with this composition on a very light background. However, this composition might be useful for printing on non-white substrates, such as bank notes or off-white stock certificates, where the slight yellowing would be less likely to be noticed. Alternatively, a non-gloss varnish base is used to further reduce likelihood of detection when used as a covert security feature. A fourth varnish sample with 15% single-layer as-deposited ZnS exhibited noticeable yellowing, even without a side-by-side comparison with the test standard.

Single-layer ZnS flake was heat treated to clarify ("bleach") the flake. The flake was heated to 200 °C for two hours in air. Heat treating ZnS flake to enhance fluorescence (550 °C for 10 hours in air) also bleaches the flake, but bleaching can be achieved with the shorter heat treat. A varnish composition using 20% single-layer bleached ZnS showed almost no perceptible color change. Thus, it is believed that at least 10% of unbleached single-layer ZnS flake and at least 20% of bleached single-layer ZnS flake could be added to a high-gloss varnish base as a covert taggent.

ZnS is further desirable as a taggent flake because, unlike some flake including a metal (*e.g.* aluminum) layer, ZnS is durable in the presence of water, acid, base, and bleach. Unlike some organic flake, ZnS is also durable in the presence of organic solvents and sunlight.

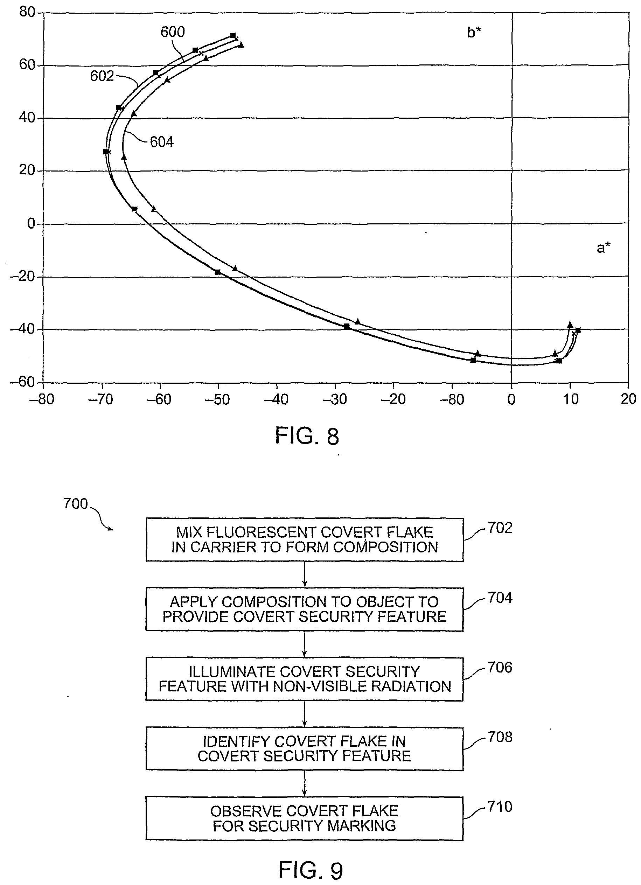

Fig. 8 shows the color travel for a test sample prepared with an ink, and for test samples prepared with the ink in combination with covert pigment flakes according to an embodiment of the present invention. The color plots are according to the CIE La*b* conventions. The illumination and viewing angles were ten degrees off from the specular angle to avoid the strong gloss component associated with clear-coated samples. The samples were characterized using eleven angles of illumination/viewing from 15°/5° to 65°/55° in 5° increments. The first point of the curve (*i.e.* the upper left point) corresponds to the 15°/5° datum, and the last (*i.e.* eleventh) point corresponds to the 65°/55° datum.

A first curve 600 shows the measured color travel for a test sample prepared with blue-to-green optically variable pigment flake. A second curve 602 shows the measured color travel for a sample prepared with 95 weight percent blue-to-green optically variable pigment flake and 5 weight percent of single-layer ZnS flake about 700 nm thick and having an average particle size of about 20 microns. Symbols on the flake were about 8x6 microns, separated by about 2 microns of field. The weight percent is the percent of the total weight of the flake used to prepare the ink composition for the sample. A third curve 604 shows the measured color travel for a sample prepared with 90 weight percent blue-green optically variable pigment flake and 10 weight percent of the same ZnS flake used in the sample associated with the second curve. These curves illustrate that very similar optical performance is achievable for ink compositions having up to 10 weight percent covert flake. In particular, the color travel is nearly identical for all three samples, and the chroma is only slightly less for the sample made with 10% clear covert flake. Thus, a covert flake according to an embodiment of the present invention is added to an existing optically variable ink to form a composition to provide a covert security feature without significantly altering the appearance of images printed with the composition.

### V. Exemplary Methods

Fig. 9 is a simplified flow chart of a method 700 of providing an object with covert flakes according to an embodiment of the present invention. Covert flakes that fluoresce under non-visible radiation are mixed in a carrier (step 702) to provide a composition, such as ink or paint, in which the covert flakes are not easily detectable by observation under visible light. In one embodiment, the covert flakes are clear covert flakes that have a symbol and/or a selected shape. In a further embodiment, the composition includes base pigment flakes or particles. In another embodiment, the covert flakes are covert pigment flakes that have a symbol and/or a selected shape. The composition is applied to the object (step 704) to provide a covert security feature. In one embodiment, the composition is applied using a printing step, such as a gravure, flexographic, offset, letterpress, intaglio, or screen printing step. In another embodiment, the composition is applied using a painting step, such as a rolling, dipping, brushing, or spray painting step.

After providing the covert security feature, the covert security feature is observed by illuminating the object with non-visible radiation (step 706) to cause the covert flakes to fluoresce and a covert flake is identified (step 708). If the composition has base pigment flakes or particles that also fluoresce, it is understood that the covert flakes fluoresce significantly more or less, or at a different color, than the base pigment flakes or particles so that the covert flakes stand out in the composition and are easily identified. The identified covert flake is observed (step 710) for a security marking. In one embodiment, the covert flake has a selected shape and is observed while the object is illuminated with non-visible radiation. In another embodiment, the covert flake includes a symbol, and the covert flake is observed using visible light after the step of identifying the covert flake using non-visible radiation. In a particular embodiment, the step of observing one or more symbols on the covert flake is done under magnification of 50X-200X.

### IV. Exemplary Methods

Fig. 10 is a flow chart of a method 600 of making pigment flake according to an embodiment of the present invention. A roll substrate having a non-embossed ("smooth") portion and an embossed portion in a selected ratio of the deposition surface area of the roll substrate is provided (step 602). In one embodiment, the embossed portion is embossed with a frame for producing flakes having a selected shape. In an alternative embodiment, the embossed portion is embossed with a grating pattern or symbol. In an alternative embodiment, the substrate is patterned using a process other than embossing, such as laser ablation. At least one thin film layer is deposited on the roll substrate (step 604), and the deposited thin film layer (s) is processed into flake (step 606) to result in a flake mixture having a selected amount of taggent flakes. The yield of taggent flake depends on factors such as the type of thin-film layers being processed, the nature of the frame, grating pattern, or symbol, and processing parameters.

For example, referring to Figs. 2A and 2B, if 10% of the surface of the roll substrate is embossed with a grating or symbol, then a yield of approximately 10% taggent flake having the grating pattern or symbol is expected. If 10% of the surface of the roll substrate is embossed with a diamond-shaped frame, then a yield of about 9% is expected for dielectric-metal-dielectric flake because of the 10% yield loss processing the patterned portion of the thin film stack into shaped flakes. Similarly, a yield of about 5% is expected for shaped all-dielectric flake because of the 50% yield loss processing the patterned portion of the thin film stack into shaped flakes.

## Claims

1. A plurality of inorganic dielectric taggent flakes (18), each being 5-100 microns across, comprising one or more thin film layers, and having a same selected shape, but not including a symbol or logo being magnetic stripes..

2. A plurality of inorganic dielectric taggent flakes (18) of claim 1, wherein the taggent flakes (18) are clear flakes.

3. A plurality of inorganic dielectric taggent flakes (18) of claim 1, wherein the flakes include a grating pattern.

4. A plurality of inorganic dielectric taggent flakes (18) of claim 1, wherein the flakes include at least one selected symbol (17, 17').

5. A coating composition comprising: a carrier and a plurality of inorganic dielectric taggent flakes (18) defined in claim 1, dispersed in the carrier.

6. The coating composition of claim 5, wherein the carrier comprises a varnish base.

7. The coating composition of claim 6, wherein the taggent flakes (18) are ZnS flakes making up not more than 10% of the coating composition.

8. The coating composition of claim 5, further comprising base pigment (16) dispersed in the carrier, an amount of the taggent flakes (18) in the coating composition being selected so that the coating composition appears to be the same color as a second coating composition consisting of the base pigment (16) dispersed in the carrier.

9. The coating composition of claim 8, wherein the base pigment (16) is optically variable pigment flake, and the taggent flakes (18) are ZnS flakes, the ZnS flakes being not more than 10 weight percent of a total flake weight.

10. The coating composition of claim 8, wherein the taggent flakes (18) fluoresce when illuminated with non-visible radiation.

11. The coating composition of claim 10, wherein the base pigment (16) fluoresces when illuminated with the non-visible radiation, the taggent flakes (18) fluorescing differently than the base pigment (16).

12. The coating composition of claim 5, wherein the taggent flakes (18) have a transmittance in the carrier of more than 70% in the visible region of light.

13. The coating composition of claim 5, further comprising base pigment(16) having a color, wherein the taggent flakes (18) are flakes having the color.

14. The coating composition of claim 13, wherein the taggent flakes (18) have a grating pattern.

15. The coating composition of claim 13, wherein the taggent flakes (18) include at least one selected symbol (17, 17').

16. The coating composition of claim 13, wherein the taggent flakes (18) fluoresce when illuminated with non-visible radiation.

17. The coating composition of claim 16, wherein the base pigment (16) fluoresces when illuminated with the non-visible radiation, the taggent flakes (18) fluorescing differently than the base pigment (16).

18. The coating composition of claim 5, wherein the taggent flakes (18) are single- layer ZnS flakes.

19. The coating composition of claim 18, wherein the base pigment (16) comprises nacreous mineral-based flake, and the ZnS taggent flakes (18) and the nacreous mineral-based flake have a same thickness.

20. The coating composition of claim 19, wherein the taggent flakes (18) comprise less than 1 weight percent of a total pigment weight.

21. A plurality of inorganic taggent flakes (18) of claim 1, wherein the taggent flakes (18) each has a thickness less than 10 microns.

22. A plurality of inorganic taggent flakes (18) of claim 1, wherein each of the taggent flakes (18) comprises multiple thin film layers.

23. A plurality of inorganic taggent flakes (18) of claim 1, wherein the each taggent flakes (18) has a thickness between 0.5 micron and 3 microns.

24. The coating composition of claim 5, wherein the taggent flakes (18) comprise a first plurality of flakes having a first shape and a second plurality of flakes having a second selected shape different from the first shape.

25. A plurality of inorganic taggent flakes (18) of claim 1, wherein the taggent flakes (18) are shaped opaque flakes.

26. A plurality of inorganic taggent flakes (18) of claim 1, wherein the taggent flakes (18) have a grating pattern, the selected shape being visible at a first magnification and the grating pattern not being visible at the first magnification, wherein the grating pattern is visible at a second magnification, the second magnification being greater than the first magnification.

27. A plurality of inorganic taggent flakes (18) of claim 1, wherein the flakes have a transmittance of more than 70% in the visible region.

28. A plurality of inorganic taggent flakes (18) of claim 1, wherein the taggent flakes (18) are shaped opaque flakes.

29. A plurality of inorganic taggent flakes (18) of claim 1, wherein the taggent flakes (18) are dielectric single-layered clear flakes having the same selected shape.

30. A plurality of inorganic taggent flakes (18) defined in claim 1, wherein each flake has a square, diamond, trapezoidal or round shape.

31. The coating composition of claim 5, further comprising base pigment (16) having a selected color, the taggent flakes (18) having the selected color.

32. The coating composition of claim 5, further comprising mica-based base pigment.

33. The coating composition of claim 5, further comprising color-shifting base pigment.

34. A method of making the taggent flakes (18) of claim 1, comprising the steps of: providing a substrate (11) having a first patterned portion and a second portion; depositing at least one thin film layer on the substrate (11); and processing the at least one thin film layer into a flake mixture including the taggent flakes (18).

35. The method of claim 34, wherein the substrate (11) is a roll of polymer film.

36. The method of claim 34, wherein the second portion is a second patterned portion.

37. The method of claim 34, wherein the first patterned portion includes a frame, the taggent flakes (18) having a selected shape.

38. The method of claim 34, wherein the first patterned portion includes a grating pattern (13, 13').

39. The method of claim 34, wherein the first patterned portion includes a symbol (20).

40. A plurality of inorganic taggent flakes (18) of claim 1, wherein the flake is a clear flake fluorescing when illuminated with ultraviolet light, the clear flake having one or more symbols readable under visible light at a magnification of 50X-200X.

41. A method of providing an object (10) with a covert security feature (14), the method comprising step of:
applying a composition according to claim 5, to the object (10) to provide the covert security feature (14).

42. The method of claim 41, wherein the object (10) has an existing security feature (12), the taggent flakes (18) are clear flakes, and the carrier is a varnish, the step of applying comprising applying the varnish over the existing security feature (12).

43. A composition comprising:
a chemical; and
a plurality of inorganic dielectric taggent flakes (18) of claim 1 mixed with the chemical to form the composition.

44. The composition of claim 43, wherein the chemical is an explosive compound or an explosive precursor.

45. The composition of claim 43, wherein the inorganic dielectric taggent flakes (18) are essentially transparent and have symbols (17, 17').

46. The composition of claim 43, wherein the inorganic dielectric taggent flakes (18) fluoresce when exposed to non-visible radiation.

## Patentansprüche

1. Eine Vielzahl von anorganischen dielektrischen Markierungsplättchen (18) mit jeweils einer Breite von 5-100 Mikrometer, die eine oder mehrere Dünnfilmschichten beinhalten und eine gleiche ausgewählte Form aufweisen aber kein Symbol oder Logo in Form von Magnetstreifen umfassen.

2. Vielzahl von anorganischen dielektrischen Markierungsplättchen (18) gemäß Anspruch 1, wobei die Markierungsplättchen (18) klare Plättchen sind.

3. Vielzahl von anorganischen dielektrischen Markierungsplättchen (18) gemäß Anspruch 1, wobei die Plättchen ein Gittermuster umfassen.

4. Vielzahl von anorganischen dielektrischen Markierungsplättchen (18) gemäß Anspruch 1, wobei die Plättchen mindestens ein ausgewähltes Symbol (17, 17') umfassen.

5. Eine Beschichtungszusammensetzung, die Folgendes beinhaltet: einen Träger und eine Vielzahl von in Anspruch 1 definierten anorganischen dielektrischen Markierungsplättchen (18), die in dem Träger dispergiert sind.

6. Beschichtungszusammensetzung gemäß Anspruch 5, wobei der Träger eine Lackbasis beinhaltet.

7. Beschichtungszusammensetzung gemäß Anspruch 6, wobei die Markierungsplättchen (18) ZnS-Plättchen sind, die nicht mehr als 10 % der Beschichtungszusammensetzung ausmachen.

8. Beschichtungszusammensetzung gemäß Anspruch 5, ferner beinhaltend ein in dem Träger dispergiertes Basispigment (16), wobei ein Anteil der Markierungsplättchen (18) in der Beschichtungszusammensetzung so ausgewählt ist, dass die Beschichtungszusammensetzung dem Anschein nach dieselbe Farbe wie eine zweite Beschichtungszusammensetzung, die aus dem in dem Träger dispergierten Basispigment (16) besteht, aufweist.

9. Beschichtungszusammensetzung gemäß Anspruch 8, wobei das Basispigment (16) ein optisch veränderliches Pigmentplättchen ist und die Markierungsplättchen (18) ZnS-Plättchen sind, wobei die ZnS-Plättchen nicht mehr als 10 Gewichtsprozent eines Gesamtplättchengewichts ausmachen.

10. Beschichtungszusammensetzung gemäß Anspruch 8, wobei die Markierungsplättchen (18) bei Beleuchtung mit unsichtbarer Strahlung fluoreszieren.

11. Beschichtungszusammensetzung gemäß Anspruch 10, wobei das Basispigment (16) bei Beleuchtung mit unsichtbarer Strahlung fluoresziert, wobei die Markierungsplättchen (18) anders als das Basispigment (16) fluoreszieren.

12. Beschichtungszusammensetzung gemäß Anspruch 5, wobei die Markierungsplättchen (18) eine Durchlässigkeit in dem Träger von mehr als 70 % in dem sichtbaren Lichtbereich aufweisen.

13. Beschichtungszusammensetzung gemäß Anspruch 5, ferner beinhaltend ein Basispigment (16) mit einer Farbe, wobei die Markierungsplättchen (18) Plättchen mit der Farbe sind.

14. Beschichtungszusammensetzung gemäß Anspruch 13, wobei die Markierungsplättchen (18) ein Gittermuster aufweisen.

15. Beschichtungszusammensetzung gemäß Anspruch 13, wobei die Markierungsplättchen (18) mindestens ein ausgewähltes Symbol (17, 17') umfassen.

16. Beschichtungszusammensetzung gemäß Anspruch 13, wobei die Markierungsplättchen (18) bei Beleuchtung mit unsichtbarer Strahlung fluoreszieren.

17. Beschichtungszusammensetzung gemäß Anspruch 16, wobei das Basispigment (16) bei Beleuchtung mit unsichtbarer Strahlung fluoresziert, wobei die Markierungsplättchen (18) anders als das Basispigment (16) fluoreszieren.

18. Beschichtungszusammensetzung gemäß Anspruch 5, wobei die Markierungsplättchen (18) einschichtige ZnS-Plättchen sind.

19. Beschichtungszusammensetzung gemäß Anspruch 18, wobei das Basispigment (16) ein schimmerndes Plättchen auf Mineralbasis beinhaltet und die ZnS-Markierungsplättchen (18) und das schimmernde Plättchen auf Mineralbasis dieselbe Dicke aufweisen.

20. Beschichtungszusammensetzung gemäß Anspruch 19, wobei die Markierungsplättchen (18) weniger als 1 Gewichtsprozent eines Gesamtpigmentgewichts ausmachen.

21. Vielzahl von anorganischen Markierungsplättchen (18) gemäß Anspruch 1, wobei die Markierungsplättchen (18) jeweils eine Dicke von weniger als 10 Mikrometer aufweisen.

22. Vielzahl von anorganischen Markierungsplättchen (18) gemäß Anspruch 1, wobei jedes Markierungsplättchen (18) mehrere Dünnfilmschichten beinhaltet.

23. Vielzahl von anorganischen Markierungsplättchen (18) gemäß Anspruch 1, wobei jedes der Markierungsplättchen (18) eine Dicke zwischen 0,5 Mikrometer und 3 Mikrometer aufweist.

24. Beschichtungszusammensetzung gemäß Anspruch 5, wobei die Markierungsplättchen (18) eine erste Vielzahl von Plättchen mit einer ersten Form und eine zweite Vielzahl von Plättchen mit einer zweiten ausgewählten Form, die sich von der ersten Form unterscheidet, beinhalten.

25. Vielzahl von anorganischen Markierungsplättchen (18) gemäß Anspruch 1, wobei die Markierungsplättchen (18) geformte opake Plättchen sind.

26. Vielzahl von anorganischen Markierungsplättchen (18) gemäß Anspruch 1, wobei die Markierungsplättchen (18) ein Gittermuster aufweisen, wobei die ausgewählte Form bei einer ersten Vergrößerung sichtbar ist und das Gittermuster bei der ersten Vergrößerung nicht sichtbar ist, wobei das Gittermuster bei einer zweiten Vergrößerung sichtbar ist, wobei die zweite Vergrößerung größer als die erste Vergrößerung ist.

27. Vielzahl von anorganischen Markierungsplättchen (18) gemäß Anspruch 1, wobei die Plättchen eine Durchlässigkeit von mehr als 70 % in dem sichtbaren Bereich aufweisen.

28. Vielzahl von anorganischen Markierungsplättchen (18) gemäß Anspruch 1, wobei die Markierungsplättchen (18) geformte opake Plättchen sind.

29. Vielzahl von anorganischen Markierungsplättchen (18) gemäß Anspruch 1, wobei die Markierungsplättchen (18) dielektrische einschichtige klare Plättchen sind, die die gleiche ausgewählte Form aufweisen.

30. Vielzahl von in Anspruch 1 definierten anorganischen Markierungsplättchen (18), wobei jedes Plättchen eine quadratische, rautenförmige, trapezförmige oder runde Form aufweist.

31. Beschichtungszusammensetzung gemäß Anspruch 5, ferner beinhaltend ein Basispigment (16) mit einer ausgewählten Farbe, wobei die Markierungsplättchen (18) die ausgewählte Farbe aufweisen.

32. Beschichtungszusammensetzung gemäß Anspruch 5, ferner beinhaltend ein Basispigment auf Glimmerbasis.

33. Beschichtungszusammensetzung gemäß Anspruch 5, ferner beinhaltend ein farbveränderndes Basispigment.

34. Ein Verfahren zum Herstellen der Markierungsplättchen (18) gemäß Anspruch 1, das die folgenden Schritte beinhaltet: Bereitstellen eines Substrats (11) mit einem ersten gemusterten Teil und einem zweiten Teil; Aufbringen mindestens einer Dünnfilmschicht auf dem Substrat (11); und Verarbeiten der mindestens einen Dünnfilmschicht in eine die Markierungsplättchen (18) umfassende Plättchenmischung.

35. Verfahren gemäß Anspruch 34, wobei das Substrat (11) eine Walze aus Polymerfilm ist.

36. Verfahren gemäß Anspruch 34, wobei der zweite Teil ein zweiter gemusterter Teil ist.

37. Verfahren gemäß Anspruch 34, wobei der erste gemusterte Teil einen Rahmen umfasst, wobei die Markierungsplättchen (18) eine ausgewählte Form aufweisen.

38. Verfahren gemäß Anspruch 34, wobei der erste gemusterte Teil ein Gittermuster (13, 13') umfasst.

39. Verfahren gemäß Anspruch 34, wobei der erste gemusterte Teil ein Symbol (20) umfasst.

40. Vielzahl von anorganischen Markierungsplättchen (18) gemäß Anspruch 1, wobei das Plättchen ein klares Plättchen ist, das bei Beleuchtung mit Ultraviolettlicht fluoresziert, wobei das klare Plättchen ein oder mehrere Symbole aufweist, die unter sichtbarem Licht bei einer Vergrößerung von 50X-200X lesbar sind.

41. Ein Verfahren zum Bereitstellen eines Objekts (10) mit einem verdeckten Sicherheitsmerkmal (14), wobei das Verfahren den folgenden Schritt beinhaltet:
Auftragen einer Zusammensetzung gemäß Anspruch 5 auf das Objekt (10), um das verdeckte Sicherheitsmerkmal (14) bereitzustellen.

42. Verfahren gemäß Anspruch 41, wobei das Objekt (10) ein bestehendes Sicherheitsmerkmal (12) aufweist, die Markierungsplättchen (18) klare Plättchen sind und der Träger ein Lack ist, wobei der Schritt des Auftragens das Auftragen des Lacks über dem bestehenden Sicherheitsmerkmal (12) beinhaltet.

43. Eine Zusammensetzung, die Folgendes beinhaltet:
eine Chemikalie; und
eine Vielzahl von anorganischen dielektrischen Markierungsplättchen (18) gemäß Anspruch 1, die mit der Chemikalie gemischt werden, um die Zusammensetzung zu bilden.

44. Zusammensetzung gemäß Anspruch 43, wobei die Chemikalie eine explosive Verbindung oder ein explosiver Präkursor ist.

45. Zusammensetzung gemäß Anspruch 43, wobei die anorganischen dielektrischen Markierungsplättchen (18) im Wesentlichen transparent sind und Symbole (17, 17') aufweisen.

46. Zusammensetzung gemäß Anspruch 43, wobei die anorganischen dielektrischen Markierungsplättchen (18) bei Beleuchtung mit unsichtbarer Strahlung fluoreszieren.

## Revendications

1. Une pluralité de paillettes marqueurs diélectriques inorganiques (18), chacune faisant de 5 à 100 microns de large, comprenant une ou plusieurs couches de film mince, et ayant une même forme sélectionnée, mais n'incluant pas de symbole ou logo qui soit des bandes magnétiques.

2. Une pluralité de paillettes marqueurs diélectriques inorganiques (18) de la revendication 1, où les paillettes marqueurs (18) sont des paillettes claires.

3. Une pluralité de paillettes marqueurs diélectriques inorganiques (18) de la revendication 1, où les paillettes incluent un motif de réseau.

4. Une pluralité de paillettes marqueurs diélectriques inorganiques (18) de la revendication 1, où les paillettes incluent au moins un symbole sélectionné (17, 17').

5. Une composition de revêtement comprenant : un véhicule et une pluralité de paillettes marqueurs diélectriques inorganiques (18) définies dans la revendication 1, dispersées dans le véhicule.

6. La composition de revêtement de la revendication 5, où le véhicule comprend une base de vernis.

7. La composition de revêtement de la revendication 6, où les paillettes marqueurs (18) sont des paillettes de ZnS qui ne constituent pas plus de 10 % de la composition de revêtement.

8. La composition de revêtement de la revendication 5, comprenant en sus un pigment de base (16) dispersé dans le véhicule, une quantité des paillettes marqueurs (18) dans la composition de revêtement étant sélectionnées de sorte que la composition de revêtement semble être de la même couleur qu'une deuxième composition de revêtement constituée du pigment de base (16) dispersé dans le véhicule.

9. La composition de revêtement de la revendication 8, où le pigment de base (16) est une paillette de pigment optiquement variable, et les paillettes marqueurs (18) sont des paillettes de ZnS, les paillettes de ZnS ne faisant pas plus de 10 pour cent en poids d'un poids de paillettes total.

10. La composition de revêtement de la revendication 8, où les paillettes marqueurs (18) fluorescent lorsqu'elles sont éclairées par un rayonnement non visible.

11. La composition de revêtement de la revendication 10, où le pigment de base (16) fluoresce lorsqu'il est éclairé par le rayonnement non visible, les paillettes marqueurs (18) fluoresçant différemment du pigment de base (16).

12. La composition de revêtement de la revendication 5, où les paillettes marqueurs (18) ont une transmittance dans le véhicule de plus de 70 % dans le domaine visible de la lumière.

13. La composition de revêtement de la revendication 5, comprenant en sus un pigment de base (16) qui a une couleur, où les paillettes marqueurs (18) sont des paillettes qui ont cette couleur.

14. La composition de revêtement de la revendication 13, où les paillettes marqueurs (18) ont un motif de réseau.

15. La composition de revêtement de la revendication 13, où les paillettes marqueurs (18) incluent au moins un symbole sélectionné (17, 17').

16. La composition de revêtement de la revendication 13, où les paillettes marqueurs (18) fluorescent lorsqu'elles sont éclairées par un rayonnement non visible.

17. La composition de revêtement de la revendication 16, où le pigment de base (16) fluoresce lorsqu'il est éclairé par le rayonnement non visible, les paillettes marqueurs (18) fluoresçant différemment du pigment de base (16).

18. La composition de revêtement de la revendication 5, où les paillettes marqueurs (18) sont des paillettes de ZnS monocouches.

19. La composition de revêtement de la revendication 18, où le pigment de base (16) comprend une paillette à base de minéral nacré, et les paillettes marqueurs de ZnS (18) et la paillette à base de minéral nacré ont une même épaisseur.

20. La composition de revêtement de la revendication 19, où les paillettes marqueurs (18) composent moins de 1 pour cent en poids d'un poids de pigment total.

21. Une pluralité de paillettes marqueurs inorganiques (18) de la revendication 1, où les paillettes marqueurs (18) ont chacune une épaisseur de moins de 10 microns.

22. Une pluralité de paillettes marqueurs inorganiques (18) de la revendication 1, où chacune de ces paillettes marqueurs (18) comprend de multiples couches de film mince.

23. Une pluralité de paillettes marqueurs inorganiques (18) de la revendication 1, où chacune de ces paillettes marqueurs (18) a une épaisseur comprise entre 0,5 micron et 3 microns.

24. La composition de revêtement de la revendication 5, où les paillettes marqueurs (18) comprennent une première pluralité de paillettes qui ont une première forme et une deuxième pluralité de paillettes qui ont une deuxième forme sélectionnée différente de la première forme.

25. Une pluralité de paillettes marqueurs inorganiques (18) de la revendication 1, où les paillettes marqueurs (18) sont des paillettes opaques mises en forme.

26. Une pluralité de paillettes marqueurs inorganiques (18) de la revendication 1, où les paillettes marqueurs (18) ont un motif de réseau, la forme sélectionnée étant visible à un premier grossissement et le motif de réseau n'étant pas visible au premier grossissement, où le motif de réseau est visible à un deuxième grossissement, le deuxième grossissement étant supérieur au premier grossissement.

27. Une pluralité de paillettes marqueurs inorganiques (18) de la revendication 1, où les paillettes ont une transmittance de plus de 70 % dans le domaine visible.

28. Une pluralité de paillettes marqueurs inorganiques (18) de la revendication 1, où les paillettes marqueurs (18) sont des paillettes opaques mises en forme.

29. Une pluralité de paillettes marqueurs inorganiques (18) de la revendication 1, où les paillettes marqueurs (18) sont des paillettes claires monocouches diélectriques qui ont la même forme sélectionnée.

30. Une pluralité de paillettes marqueurs inorganiques (18) définies dans la revendication 1, où chaque paillette a une forme carrée, en losange, trapézoïdale, ou ronde.

31. La composition de revêtement de la revendication 5, comprenant en sus un pigment de base (16) qui a une couleur sélectionnée, les paillettes marqueurs (18) ayant cette couleur sélectionnée.

32. La composition de revêtement de la revendication 5, comprenant en sus un pigment de base à base de mica.

33. La composition de revêtement de la revendication 5, comprenant en sus un pigment de base à variation de couleur.

34. Une méthode pour réaliser les paillettes marqueurs (18) de la revendication 1, comprenant les étapes : de fourniture d'un substrat (11) qui a une première portion à motif et une deuxième portion ; de dépôt d'au moins une couche de film mince sur le substrat (11) ; et de transformation de l'au moins une couche de film mince en un mélange de paillettes incluant les paillettes marqueurs (18).

35. La méthode de la revendication 34, où le substrat (11) est un rouleau de film polymère.

36. La méthode de la revendication 34, où la deuxième portion est une deuxième portion à motif.

37. La méthode de la revendication 34, où la première portion à motif inclut un cadre, les paillettes marqueurs (18) ayant une forme sélectionnée.

38. La méthode de la revendication 34, où la première portion à motif inclut un motif de réseau (13, 13').

39. La méthode de la revendication 34, où la première portion à motif inclut un symbole (20).

40. Une pluralité de paillettes marqueurs inorganiques (18) de la revendication 1, où la paillette est une paillette claire fluoresçant lorsqu'elle est éclairée par de la lumière ultraviolette, la paillette claire ayant un ou plusieurs symboles lisibles sous de la lumière visible à un grossissement de 50X à 200X.

41. Une méthode pour fournir à un objet (10) un élément de sécurité dissimulé (14), la méthode comprenant une étape :
d'application d'une composition selon la revendication 5, sur l'objet (10) afin de fournir l'élément de sécurité dissimulé (14).

42. La méthode de la revendication 41, où l'objet (10) a un élément de sécurité existant (12), les paillettes marqueurs (18) sont des paillettes claires, et le véhicule est un vernis, l'étape d'application comprenant l'application du vernis par-dessus l'élément de sécurité existant (12).

43. Une composition comprenant :
un produit chimique ; et
une pluralité de paillettes marqueurs diélectriques inorganiques (18) de la revendication 1 mélangées avec le produit chimique afin de former la composition.

44. La composition de la revendication 43, où le produit chimique est un composé explosif ou un précurseur d'explosif.

45. La composition de la revendication 43, où les paillettes marqueurs diélectriques inorganiques (18) sont essentiellement transparentes et ont des symboles (17, 17').

46. La composition de la revendication 43, où les paillettes marqueurs diélectriques inorganiques (18) fluorescent lorsqu'elles sont exposées à un rayonnement non visible.
